# EUROPEAN PATENT SPECIFICATION

(11) **EP 3 926 798 B1**
(45) Date of publication and mention of the grant of the patent: **29.04.2026**
(21) Application number: 19933937.5
(22) Date of filing: 24.12.2019
(51) Int. Cl.: H02K 1/24, H02K 1/26, H02K 17/18, H02K 17/20, H02K 19/14

(54) **DIRECT-START SYNCHRONOUS RELUCTANCE ELECTRIC MOTOR ROTOR STRUCTURE, ELECTRIC MOTOR AND COMPRESSOR**
AUFBAU EINES ELEKTRISCHEN DIREKTSTART-SYNCHRONRELUKTANZMOTORROTORS, ELEKTROMOTOR UND VERDICHTER
STRUCTURE DE ROTOR DE MOTEUR ÉLECTRIQUE À RÉLUCTANCE SYNCHRONE ET DÉMARRAGE DIRECT, MOTEUR ÉLECTRIQUE ET COMPRESSEUR

(30) Priority: 19.06.2019 CN 201910532885
(43) Date of publication of application: 22.12.2021
(73) Proprietor: Gree Electric Appliances, Inc. of Zhuhai, Zhuhai, Guangdong 519070 (CN)
(72) Inventor: XIAO, Yong, Zhuhai, Guangdong 519070 (CN); CHEN, Bin, Zhuhai, Guangdong 519070 (CN); SHI, Jinfei, Zhuhai, Guangdong 519070 (CN); LI, Xia, Zhuhai, Guangdong 519070 (CN); YU, Qinhong, Zhuhai, Guangdong 519070 (CN)
(74) Representative: Noble, Nicholas
(86) International application number: PCT/CN2019/128074
(87) International publication number: WO 2020/253196

(56) References cited:
- WO-A1-2018/083639
- CN-A- 105 490 493
- CN-A- 107 994 698
- CN-A- 109 494 903
- CN-A- 110 224 565
- FR-A- 1 277 068
- JP-A- 2005 278 372
- US-A- 4 358 696
- US-A1- 2018 198 356
- HU YUSHENG ET AL: "Effect of Direction and Shape of Rotor Conductor Bars on Parameters of Line-Start Synchronous Reluctance Motor", 2018 21ST INTERNATIONAL CONFERENCE ON ELECTRICAL MACHINES AND SYSTEMS (ICEMS), KIEE EMECS (KIEE ELECTRICAL MACHINERY AND ENERGY CONVERSION SYSTEMS), 7 October 2018 (2018-10-07), pages 634 - 639, XP033451935, DOI: 10.23919/ICEMS.2018.8549522

## Description

### TECHNICAL FIELD

The present application relates to the field of compressor device technology, and particularly to a rotor structure for a direct-start synchronous reluctance motor, a motor and a compressor. The application claims priority to Chinese Patent Application No. 201910532885.2, entitled "Rotor Structure for Direct-Start Synchronous Reluctance Motor, Motor, and Compressor", filed on June 19, 2019.

### BACKGROUND

The direct-start synchronous reluctance motor combines the structural characteristics of an induction motor and a synchronous reluctance motor, and implements the start through the torque generated by the squirrel cage induction, and implements the constant speed operation by a difference between the d-axis inductance and the q-axis inductance, and thus can be directly connected to the power supply to implement the start-up operation. Compared with the direct-start permanent magnet motor, the direct-start synchronous reluctance motor has no rare earth permanent magnet materials and no demagnetization problem. Accordingly, the motor has low cost and good reliability, and has high efficiency and constant speed compared to the asynchronous motor.

In the prior art, the patent with publication number CN 103208894 A discloses a rotor structure. The outer circumferential side of the rotor is provided with slots (grooves) in the q-axis direction to increase the magnetic resistance in the q-axis direction, block the magnetic flux flow in the *q*-axis direction, reduce the *q*-axis inductance, thereby increasing the difference between the *d*-axis inductance and the *q*-axis inductance of the motor and increasing the motor torque. However, due to the removal of the squirrel cage at the groove, the starting ability of the motor is deteriorated, which affects the starting performance of the motor. At the same time, the design of the squirrel cage slot will reduce the difference between the *d*-axis inductance and the *q*-axis inductance of the motor and reduce the efficiency of the motor.

The patent with the patent No. CN1286250C provides a rotor. At least one of convex and concave is provided on the slit of the rotor. The aforementioned convex and concave are constructed in such a way that a combination of a fill material and the rotor core is subjected to a centrifugal force causing that the rotor portion outside the slit and the filling material to protrude from the rotor center side to the outside caused by the rotation of the rotor. However, the arrangement of the concave and convex portions will cause local saturation of the rotor magnetism, which will affect the *d*-axis inductance of the motor, resulting in a decrease in the motor efficiency, and the slit is narrower. The effect of increasing the mechanical strength of the rotor by arranging the concave and convex grooves is not obvious.

The document "HU YUSHENG ET AL: 'Effect of Direction and Shape of Rotor Conductor Bars on Parameters of Line-Start Synchronous Reluctance Motor', 2018 21ST INTERNATIONAL CONFERENCE ON ELECTRICAL MACHINES AND SYSTEMS (ICEMS), KIEE EMECS (KIEE ELECTRICAL MACHINERY AND ENERGY CONVERSION SYSTEMS), 7 October 2018 (2018-10-07), pages 634-639, XP033451935" discloses a new rotor conductor bars (improved model), the direction of the conductor bars parallel to the d-axis, and reduce the obstacle of the conductor bars to the d-axis magnetic flux, making the magnetic flux concentrated in the d-axis direction, while a long curved conductor bar in q-axis is set to block the flow of magnetic flux from here. The other sizes of the initial and improved rotor models are same.

The document WO 2018/083639 A1 discloses that the rotor of a synchronous reluctance motor is defined by a plurality of superimposed laminations, each of which has two series of openings distributed within two mutually concentric circular crowns; one series of the openings having for each magnetic pole of the synchronous reluctance motor a respective central opening arranged between at least two side openings, each of which opens outwards at an outer surface of the respective lamination.

The document FR1277068 A discloses a rotor, which includes in the usual manner a carcass or magnetic armature with a series of salient poles distributed along its circumference and separated by longitudinal grooves filled with conductive material but non-magnetic, also has, at least one end of its armature, -a rotor extension made of magnetic material, separated from the armature by a certain axial distance in which is inserted a separating element made of non-magnetic material, and said extension as well as said separator both having aligned winding slots filled with conductive but non-magnetic material connected to that which fills the grooves of the armature, all these fillings being connected together at the other end of the rotor to form a squirrel cage winding.

### SUMMARY

The present invention is set out in the appended claims. Further aspects and preferred embodiments are defined in the dependent claims. Aspects, embodiments, examples, and implementations of the present disclosure that do not fall within the scope of the appended claims do not form part of the invention and are merely provided for illustrative purposes. The main purpose of this application is to provide a rotor structure for a direct-start synchronous reluctance motor, a motor and a compressor to solve the problem of low efficiency of the motor in the prior art.

In order to achieve the above purpose, in one aspect of the present application a rotor structure for a direct-start synchronous reluctance motor is provided, including: a rotor core, a q-axis squirrel cage slot is provided on an outer circumferential surface of the rotor core, the q-axis squirrel cage slot is located in a q-axis direction of the rotor core, an end of at least one of two slot walls of the q-axis squirrel cage slot adjacent to the outer circumferential surface of the rotor core is arranged to extend toward the other slot wall, such that a snap-fit limit space is formed between the two slot walls, and the snap-fit limit space is configured to be filled with a conductive and non-magnetic conductive material; a width of a cross section of the q-axis squirrel cage slot is gradually decreased and then gradually increased outwards in a radial direction of the rotor core; an angle between a line connecting an edge of the first slot wall to a hole center of a shaft hole of the rotor core and a line connecting an edge of the second slot wall to the hole center of the shaft hole of the rotor core is equal to θ, wherein 0.08*180/*p*≤ θ ≤0.3*180/*p*, and *p* is the number of motor pole pairs.

Furthermore, the two slot walls includes a first slot wall and a second slot wall, a first end of the first slot wall is connected to a slot bottom of the *q*-axis squirrel cage slot, a second end of the first slot wall is configured to extend toward a side of the second slot wall, there is a first angle between at least a part of an inner wall surface of the first slot wall and a plane in which the slot bottom is located, and the first angle is an acute angle.

Furthermore, a first end of the second slot wall is connected to the slot bottom, and a second end of the second slot wall is configured to extend toward a side of the first slot wall, and there is a second angle between at least a part of an inner wall surface of the second slot wall and a plane in which the slot bottom is located, and the second angle is an acute angle.

Furthermore, a plurality of slit slots are provided between the *q*-axis squirrel cage slot and the shaft hole of the rotor core, and both ends of each slit slot are provided with a squirrel cage slot.

Furthermore, a first end of the squirrel cage slot is arranged adjacent to the slit slot, and a second end of the squirrel cage slot is arranged to extend outward in the radial direction of the rotor core and gradually approach a *d*-axis of the rotor core.

Furthermore, squirrel cage slots are arranged at intervals in the circumferential direction of the rotor core, and the squirrel cage slots are arranged symmetrically with respect to the *q*-axis or the *d*-axis.

Furthermore, a first independent squirrel cage slot is provided between a first end of the slit slot adjacent to the *q-*axis squirrel cage slot and a first end of the *q*-axis squirrel cage slot, and a second independent squirrel cage slot is provided between a second end of the slit slot and a second end of the *q*-axis squirrel cage slot.

Furthermore, the first independent squirrel cage slot and the second independent squirrel cage slot are symmetrically arranged with respect to the *q*-axis.

Furthermore, there are two first independent squirrel cage slots, and the two first independent squirrel cage slots are arranged symmetrically with respect to the *d*-axis; or there are two second independent squirrel cage slots, and the two second independent squirrel cage slots are arranged symmetrically with respect to the *d*-axis.

Furthermore, the slit slot is arc-shaped, and an arc of the slit slot is arranged to gradually decrease outward in the radial direction of the rotor core.

Furthermore, a width of the slit slot is arranged to gradually increase from a middle portion of the slit slot to both ends of the slit slot.

Furthermore, a distance between the end of the slit slot and an adjacent squirrel cage slot is *L*, wherein 0.5 δ ≤*L*≤ δ , and δ is a width of an air gap between the stator core and the rotor core.

Furthermore, the first independent squirrel cage slot, the second independent squirrel cage slot, the squirrel cage slots and the *q*-axis squirrel cage slot are all injected with a conductive and non-magnetic material, the conductive and non-magnetic material is aluminum or an aluminum alloy.

Furthermore, the second end of the squirrel cage slot is arranged at a distance from an outer edge of the rotor core, such that the squirrel cage slot forms a closed slot structure, or, the outer edge of the rotor core are provided with notches respectively communicating with the squirrel cage slot, the first independent squirrel cage slot, and the second independent squirrel cage slot.

Furthermore, the *q*-axis passes through the middle portion of the *q*-axis squirrel cage slot, and the *q*-axis squirrel cage slot is symmetrically arranged with respect to the *q*-axis.

Furthermore, there are two *q*-axis squirrel cage slots, and the two *q*-axis squirrel cage slots are arranged symmetrically with respect to the *d*-axis.

In another aspect of the present application, a motor is provided, which includes the above-mentioned rotor structure for the direct-start synchronous reluctance motor.

In another aspect of the present application, a compressor is provided, which includes the above-mentioned rotor structure for the direct-start synchronous reluctance motor.

By applying the technical solution of the present application, the difference between the *d*-axis and the *q*-axis magnetic fluxes can be effectively increased, which solves the problems of low efficiency and low speed of the asynchronous motor, and improves the output power and efficiency of the motor with the rotor structure. Moreover, since the conductive and non-magnetic materials are used in the *q*-axis squirrel cage slot instead of rare earth magnets and drive controllers, the problems of low reliability such as a high cost and magnet demagnetization of the permanent magnet synchronous motors are solved.

### BRIEF DESCRIPTION OF THE DRAWINGS

The accompanying drawings of the specification forming a part of the application are utilized to provide further understanding of the present application, and the exemplary embodiments and descriptions of the present application are utilized to explain the application, and do not constitute an improper limitation to the present application. In the accompanying drawings:
FIG. 1 is a schematic structure diagram of a rotor structure for a direct-start synchronous reluctance motor according to an embodiment I of the present invention.
FIG. 2 is a schematic structure diagram of a rotor structure for a direct-start synchronous reluctance motor according to an embodiment II of the present invention.
FIG. 3 is a schematic structure diagram of a rotor structure for a direct-start synchronous reluctance motor according to an embodiment III of the present invention.

The above drawings include the following reference signs:
10, rotor core; 11, q-axis squirrel cage slot; 111, first slot wall; 112, second slot wall; 113, slot bottom; 12, shaft hole;
20, conductive and non-magnetic material;
30, slit slot;
40, squirrel cage slot;
51, first independent squirrel cage slot; 52, second independent squirrel cage slot.

### DETAILED DESCRIPTION

It should be noted that the embodiments in the present application and the features in the embodiments can be combined with each other if there is no conflict. Hereinafter, the present application will be described in detail with reference to the accompanying drawings and in conjunction with the embodiments.

It should be noted that the terms used here are merely for describing specific embodiments, and are not intended to limit the exemplary embodiments according to the present application. As used herein, unless the context clearly indicates otherwise, the singular form is also intended to include the plural form. In addition, it should also be understood that when the terms "comprising" and/or "including" are used in this specification, they indicate that there exist features, steps, operations, devices, components, and/or combinations thereof.

It should be noted that the terms "first" and "second", etc., in the description, claims and drawings of the present application are utilized to distinguish similar objects, and are not definitely utilized to describe a specific sequence or order. It should be understood that the terms used in this way can be interchanged under appropriate circumstances, so that the embodiments of the present invention described herein can be implemented in an order other than those illustrated or described herein. In addition, the terms "including" and "having" and any transformations thereof are intended to cover non-exclusive inclusions. For example, a process, a method, a system, a product, or a device that includes a series of steps or units is not definitely limited to those clearly listed steps or units, but may include other steps or units that are not clearly listed or are inherent to these processes, methods, products, or devices.

For ease of description, spatial relative terms can be used here, such as "above", "over", "on an upper surface", "on", etc., to describe a spatial position relationship between one device or feature and other devices or features as shown in the figures. It should be understood that the spatial relative terms are intended to include different orientations in use or operation other than the orientation of the device described in the figures. For example, if the device in the figures is inverted, then the device described as "above the other device or structure" or "over the other device or structure" will then be positioned as "below the other device or structure" or "under other devices or structures". Thus, the exemplary term "above" can include both orientations "above" and "below". The device can also be positioned in other different manners (such as being rotated by 90 degrees or in other orientations), and the relative description of the space used here will be explained accordingly.

Now, exemplary embodiments of the present invention will be described in more detail with reference to the accompanying drawings. However, these exemplary embodiments can be implemented in a variety of different forms, and should not be construed as being limited to the embodiments set forth herein. It should be understood that these embodiments are provided to make the disclosure of this application thorough and complete, and to fully convey the concept of these exemplary embodiments to those of ordinary skill in the art. In the drawings, for clarity, the thicknesses of the layers and regions may be enlarged, and the same reference numerals are utilized to denote the same devices, so their descriptions will be omitted.

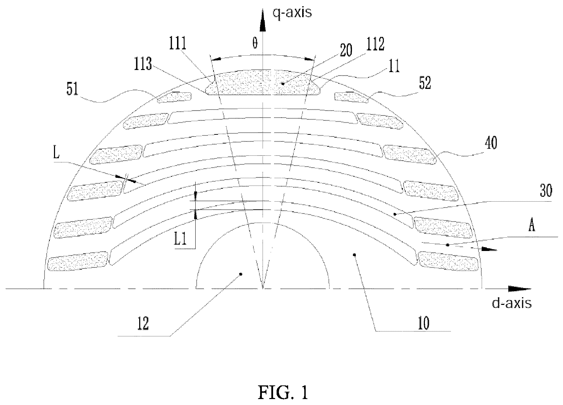

As shown in FIG. 1 to FIG. 3, according to an embodiment of the present application, a rotor structure for a direct-start synchronous reluctance motor is provided.

As shown in FIG. 1, the rotor structure includes a rotor core 10. A q-axis squirrel cage slot 11 is provided on an outer circumferential surface of the rotor core 10. The q-axis squirrel cage slot 11 is located in the q-axis direction of the rotor core 10. An end of at least one of two slot walls of the q-axis squirrel cage slot 11 adjacent to the outer circumferential surface of the rotor core 10 is arranged to extend toward the other slot wall, so that a snap-fit limit space is formed between the two slot walls, and the snap-fit limit space is configured to fill with the conductive non-magnetic material 20.

In this embodiment, the difference between the *d*-axis magnetic flux and the *q*-axis magnetic flux can be effectively increased, the problem of low efficiency and low speed of the asynchronous motor can be solved, and the output power and efficiency of the motor with the rotor structure can be improved. Moreover, since the conductive and non-magnetic material is used in the *q*-axis squirrel cage slot 11 instead of the rare earth magnet and the drive controller, the problem of low reliability such as high cost and magnet demagnetization of permanent magnet synchronous motors, etc., are solved. At the same time, a snap-fit limit space is provided between two slot walls, such arrangement can improve the stability of the conductive and non-magnetic material in the *q*-axis squirrel cage slot 11.

The two slot walls include a first slot wall 111 and a second slot wall 112. The first end of the first slot wall 111 is connected to the slot bottom 113 of the *q*-axis squirrel cage slot 11; the second end of the second slot wall 111 is extends toward a side of the second slot wall 112; there is an angle between at least part of the inner wall surface of the first slot wall 111 and a plane where the slot bottom 113 is located, and the angle is an acute angle. Such arrangement can make the cross section of the *q*-axis squirrel cage slot 11 gradually change, and can further improve the stability of the conductive and non-magnetic conductive material in the *q*-axis squirrel cage slot 11.

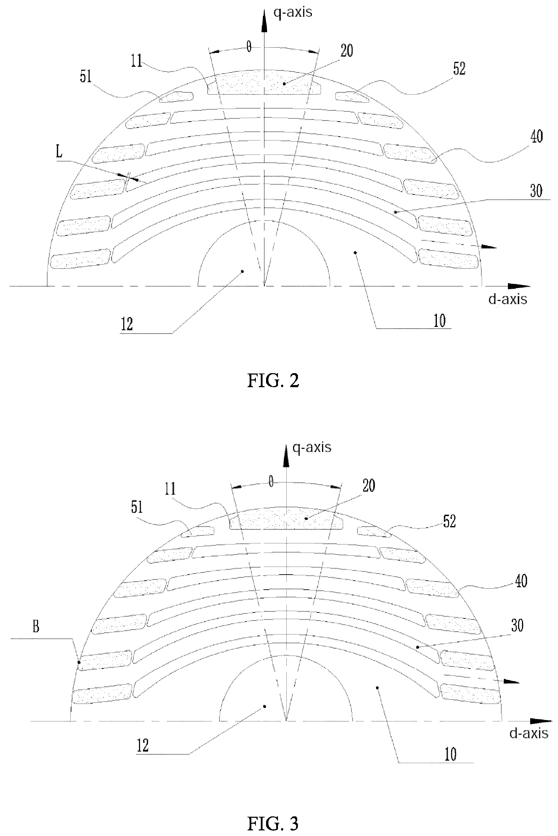

Further, the first end of the second slot wall 112 is connected to the slot bottom 113; the second end of the second slot wall 112 extends toward a side of the first slot wall 111; and there is a second angle between at least part of the inner wall surface of the second slot wall 112 and the plane where the slot bottom 113 is located, and the second angle is an acute angle. The width of the cross section of the *q*-axis squirrel cage slot 11 is gradually decreased firstly and then gradually increased outwards in a radial direction of the rotor core 10. As shown in FIG. 1, the first slot wall 111 and the second slot wall 112 are symmetrically arranged, and an arc is adopted as a transition arrangement between the first slot wall 111 and the slot bottom 113, and between the second slot wall 112 and the slot bottom 113. Of course, as shown in FIG. 2, a rectangular transition can be arranged between the first slot wall 111 and the slot bottom 113, and between the second slot wall 112 and the slot bottom 113. There is an angle between a middle portion of the first slit wall 111 and the slot bottom 113, and between a middle portion of the second slot wall 112 and the slot bottom 113, such that the middle areas of the first slot wall 111 and the second slot wall 112 is gradually contracted. Such arrangement can make the first slot wall 111 and the second slot wall 112 form snap-fit limit spaces; meanwhile, the ends of the first slot wall 111 and the second slot wall 112 can be arranged in a manner of gradually expanding outward.

An angle between a line connecting an edge of the first slot wall to the hole center of the shaft hole 12 of the rotor core 10 and a line connecting an edge of the second slot wall to the hole center of the shaft hole 12 of the rotor core 10 is equal to θ , where 0.08*180/*p*≤ θ ≤0.3*180/*p*, and *p* is the number of motor pole pairs. Such arrangement can effectively reduce the *q*-axis magnetic flux and effectively improve the starting ability of the rotor structure.

A plurality of slit slots 30 are provided between the *q*-axis squirrel cage slot 11 and the shaft hole 12 of the rotor core 10; and both ends of each slit slot 30 are provided with a squirrel cage slot 40. The first end of the squirrel cage slot 40 is arranged adjacent to the slit slot 30, and the second end of the squirrel cage slot 40 is arranged to extend outward in the radial direction of the rotor core 10 and gradually approach the *d*-axis direction of the rotor core 10. The slit slot 30 and adjacent two squirrel cage slots 40 thereof form a magnetic barrier layer. There are multiple squirrel cage slots, the multiple squirrel cage slots 40 are arranged at intervals along the circumferential direction of the rotor core 10, and the squirrel cage slots 40 are arranged symmetrically with respect to the *q*-axis or the *d*-axis. FIGS. 1 to 3 only show a half-circle structure of the rotor structure, and the other part is arranged symmetrically with respect to the d-axis.

Further, a first independent squirrel cage slot 51 is provided between the first end of the slit slot 30 adjacent to the *q*-axis squirrel cage slot 11 and the first end of the *q*-axis squirrel cage slot 11; and a second independent squirrel cage slot 52 is provided between the second end of the slit slot 30 and the second end of the *q*-axis squirrel cage slot 11. The first independent squirrel cage slot 51 and the second independent squirrel cage slot 52 are symmetrically arranged with respect to the *q*-axis. Such arrangement can improve the performance of the rotor structure. Preferably, there are two first independent squirrel cage slots 51, and the two first independent squirrel cage slots 51 are arranged symmetrically with respect to the *d*-axis; there are two second independent squirrel cage slots 52, and the two second independent squirrel cage slots 52 are arranged symmetrically with respect to the *d*-axis.

As shown in FIGS. 1 to 3, the slit slot 30 is arc-shaped, and an arc of the slit slot 30 is gradually decreased outward in the radial direction of the rotor core 10. The width of the slit slot 30 is arranged to gradually increase from the middle portion of the slit slot 30 to both ends of the slit slot 30.

In order to further improve the performance of the rotor structure, a distance between the end of the slit slot 30 and the adjacent squirrel cage slot 40 can be set to *L,* where 0.5 δ ≤*L*≤ δ , and δ is a width of an air gap between the stator core and the rotor core 10.

In this application, the first independent squirrel cage slot 51, the second independent squirrel cage slot 52, the squirrel cage slot 40 and the *q*-axis squirrel cage slot 11 are all injected with a conductive and non-magnetic material 20. The conductive and non-magnetic material 20 is aluminum or aluminum alloy. A squirrel cage is formed to generate asynchronous torque to help the motor start.

As shown in FIG. 1 and FIG. 2, the second end of the squirrel cage slot 40 is arranged at a distance from the outer edge of the rotor core 10, so that the squirrel cage slot 40 forms a closed slot structure. Alternatively, as shown in FIG. 3, the outer edge of the rotor core 10 are provided with notches respectively communicating with the squirrel cage slot 40, the first independent squirrel cage slot 51, and the second independent squirrel cage slot 52, such that the conductive and non-magnetic materials in the squirrel cage slot, the first independent squirrel cage slot and the second independent squirrel cage slot form a part of the outer periphery of the rotor. Such arrangement can also improve the performance of the rotor structure.

Further, the *q*-axis passes through the middle portion of the *q*-axis squirrel cage slot 11, and the *q*-axis squirrel cage slot 11 is symmetrically arranged with respect to the *q*-axis. There are two *q*-axis squirrel cage slots 11, and the two *q*-axis squirrel cage slots 11 are arranged symmetrically with respect to the *d*-axis.

The rotor structure in the above-mentioned embodiment can also be applied in the technical field of motor device. That is, according to another aspect of the present application, a motor is provided, which includes the rotor structure for the direct-start synchronous reluctance motor as mentioned in the above embodiment.

The rotor structure in the above embodiment can also be applied in the technical field of compressor device. That is, according to another aspect of the present application, a compressor is provided, which includes the rotor structure for the direct-start synchronous reluctance motor as mentioned in the above embodiment. Of course, the rotor structure can also be applied in the technical fields of fans and air compressor device.

Specifically, by using the direct-start synchronous reluctance motor rotor of the present application, through the special design of the *q*-axis squirrel cage slot structure, the difference between the *d*-axis and *q*-axis magnetic fluxes can be effectively increased, accordingly, the problems of low efficiency and low speed of the asynchronous motor are solved, and the output power and efficiency of the motor is improved. At the same time, the mechanical strength of the motor rotor can be increased, and the reliability of the motor is improved. The rare earth magnets and drive controllers are not used, which solves the reliability problems such as high cost and magnet demagnetization of permanent magnet synchronous motors, etc.

Through the design of the *q*-axis squirrel cage slot, the *q*-axis reluctance is increased, while ensuring the mechanical strength of the motor rotor and improving the reliability of the motor. A rotor punching sheet is provided with multiple groups of slit slots and squirrel cage slots. The slit slot and the squirrel cage slots on both ends of the corresponding slit slot are combined into a magnetic barrier layer; and there are at least two magnetic barrier layers arranged in the radial direction of the rotor. The squirrel cage slots are filled with conductive and non-magnetic material to implement asynchronous starting. A *q*-axis squirrel cage slot is provided in the *q*-axis direction of the outer circumference of the rotor punching sheet. The *q*-axis squirrel cage slot is a part of the rotor edge, and the *q*-axis squirrel cage slot is generally trapezoidal, that is, a width of a side of the outer circumference of the *q*-axis squirrel cage slot away from the inner hole of the rotor is less than a width of a side of the outer circumference of the *q*-axis squirrel cage slot adjacent to the inner hole of the rotor, in order to form snap-fit which is configured to overcome the centrifugal force generated by the *q*-axis squirrel cage slot when the rotor rotates and increase the mechanical strength of the rotor.

Further, the angle corresponding to the width of the *q*-axis squirrel cage slot is θ , where 0.08*180/*p*≤ θ ≤0.3*180/*p*, and *p* is the number of motor pole pairs. More preferably, 0.1*180/*p*≤ θ ≤0.2*180/*p*, an appropriate angle is selected to reduce the *q*-axis magnetic flux while ensuring the starting ability of the motor. The squirrel cage slot is inclined toward the *d*-axis from the inside of the rotor to the outside of the rotor, so that the magnetic passage between the squirrel cage slots is inclined to the *d*-axis direction, and the magnetic flux is concentrated in the *d*-axis direction, accordingly the *d*-axis magnetic flux is increased, and the motor output and efficiency are increased.

In this embodiment, the *q*-axis squirrel cage slot serving as a part of the rotor edge effectively increases the magnetic resistance in the *q*-axis direction and reduces the *q*-axis magnetic flux and the *q*-axis inductance. All squirrel cage slots and the *q*-axis squirrel cage slot are filled with the conductive and non-magnetic material. Preferably, the conductive and non-magnetic material is aluminum or aluminum alloy. When the motor is powered on, the squirrel cage slot generates an asynchronous torque to help the motor start. The *q*-axis squirrel cage slot is generally trapezoidal or other shapes, so that the width of a side of the outer circumference of the *q*-axis squirrel cage slot away from the inner hole of the rotor is less than the width of a side of the outer circumference of the *q*-axis squirrel cage slot adjacent to the inner hole of the rotor. A protruding snap-fit is formed on the rotor punching sheet. The snap-fit can restrain the filling of the material in the *q*-axis squirrel cage slot, and is configured to overcome the centrifugal force generated by the *q*-axis squirrel cage slot when the rotor rotates, thereby preventing the material filled in the *q*-axis squirrel cage slot from flying out or being seriously deformed, and increasing the mechanical strength of the rotor. The squirrel cage slot is inclined toward the *d*-axis from the inside to the outside of the rotor. The squirrel cage slots are located at both ends of the slit slot, and the circumference of the squirrel cage slot is symmetrical with respect to the *d*-axis or the *q*-axis. The magnetic passage between the squirrel cage slots is inclined to the *d*-axis direction, so that the magnetic flux is concentrated in the *d*-axis direction, thereby increasing the *d*-axis magnetic flux, increasing the difference between the *d*-axis and *q*-axis magnetic fluxes of the motor, and increasing the reluctance torque of the motor.

Further, an independent squirrel cage slot is provided between the squirrel cage slot and the *q*-axis squirrel cage slot, and the circumference of the independent squirrel cage slot is symmetrical with respect to the *d*-axis or the *q*-axis. The independent squirrel cage slot does not fit the magnetic barrier; the independent squirrel cage slot can effectively use the rotor space and increases the area of the squirrel cage slot, which is helpful for starting; and the independent squirrel cage slot is equivalent to a magnetic separation hole, which can reduce the torque pulsation.

The slit slot is arc-shaped, and the arc of the slit slot gradually decreases in a direction away from the center of the rotating shaft, that is, the farther away the slit slot is from the center of the rotating shaft, the smaller the arc of the slit slot is. Moreover, the arc of the slit slot protrudes toward a side away from the center of the rotating shaft. The slit width of the slit slot in the *q*-axis direction is equal to *L1,* and the width *L1* of the slit slot gradually increases from the *q*-axis to both sides. In this way, the design of the slit slot of the rotor can effectively utilize the rotor space, increase the *d*-axis magnetic flux, block the *q*-axis magnetic flux, increase the salient pole difference of the motor, and improve the efficiency of the motor.

The distance between the squirrel cage slot and a corresponding slit slot is equal to *L*, satisfying: 0.5 δ ≤*L*≤ δ , where δ is the width of the air gap between the stator core and the rotor core. Such arrangement ensures the mechanical strength of the rotor, and minimize magnetic leakage as much as possible. The squirrel cage slot and the corresponding slit slot are combined to form a magnetic barrier layer, and there are at least two magnetic barrier layers arranged in the radial direction of the rotor to form a pair of poles. The *q*-axis squirrel cage slot has various shapes. As shown in FIG. 2, the width of a side of the outer circumference of the *q*-axis squirrel cage slot away from the inner hole of the rotor is less than the width of a side of the outer circumference of the *q*-axis squirrel cage slot adjacent to the inner hole of the rotor. A protruding snap-fit is formed on the rotor punching sheet to restrain the filling of the material in the *q*-axis squirrel cage slot.

The squirrel cage slot is inclined in the *d*-axis direction from the inside of the rotor to the outside of the rotor instead of radially arranged. The centrifugal force is a radial force. Therefore, the design of the inclined squirrel cage slot helps to increase the mechanical strength of the rotor and overcome the centrifugal force generated by the squirrel cage slot when the rotor rotates, which prevents the material filled in the squirrel cage slot from flying out or being severely deformed. Based on this, the distance between the squirrel cage slot and the outer circumference of the rotor can be removed. As shown in FIG. 3, the squirrel cage slot serving as a part of the outer periphery of the rotor can further reduce the magnetic leakage, thereby improving the difference between the *d*-axis magnetic flux and the *q*-axis magnetic flux of the motor.

In addition to the above, it should be noted that the "an embodiment", "another embodiment", "embodiment", etc., referred to in this specification refer to that the specific features, structures, or features described in conjunction with the embodiment are included in at least one embodiment described generally in this application. The same expression in multiple places in the specification does not definitely refer to the same embodiment. Furthermore, when describing a specific feature, structure, or characteristic in combination with any embodiment, it is claimed that the combination of other embodiments to implement such a feature, structure, or characteristic also falls within the scope of the present invention as defined in the appended claims.

In the above-mentioned embodiments, the description of each embodiment has its own emphasis. For parts that are not described in detail in an embodiment, reference can be made to related descriptions of other embodiments.

## Claims

1. A rotor structure for a direct-start synchronous reluctance motor, comprising:
a rotor core (10), wherein a *q*-axis squirrel cage slot (11) is provided on an outer circumferential surface of the rotor core (10), the *q*-axis squirrel cage slot (11) is located in a q-axis direction of the rotor core (10), an end of at least one of two slot walls of the *q*-axis squirrel cage slot (11) adjacent to the outer circumferential surface of the rotor core (10) is arranged to extend toward the other slot wall, such that a snap-fit limit space is formed between the two slot walls, and the snap-fit limit space is configured to be filled with a conductive and non-magnetic conductive material (20);
**characterized in that** a width of a cross section of the q-axis squirrel cage slot (11) is gradually decreased and then gradually increased outwards in a radial direction of the rotor core (10);
wherein an angle between a line connecting an edge of the first slot wall (111) adjacent to the outer circumferential surface of the rotor core (10) to a hole center of a shaft hole (12) of the rotor core (10) and a line connecting an edge of the second slot wall (112) adjacent to the outer circumferential surface of the rotor core (10) to the hole center of the shaft hole (12) of the rotor core (10) is equal to θ , wherein 0.08*180/*p*≤ θ ≤0.3*180/*p*, and *p* is the number of motor pole pairs.

2. The rotor structure for the direct-start synchronous reluctance motor according to claim 1, wherein the two slot walls comprise a first slot wall (111) and a second slot wall (112), a first end of the first slot wall (111) is connected to a slot bottom (113) of the q-axis squirrel cage slot (11), a second end of the first slot wall (111) is configured to extend toward a side of the second slot wall (112), there is a first angle between at least a part of an inner wall surface of the first slot wall (111) and a plane in which the slot bottom (113) is located, and the first angle is an acute angle;
wherein a first end of the second slot wall (112) is connected to the slot bottom (113), and a second end of the second slot wall (112) is configured to extend toward a side of the first slot wall (111), and there is a second angle between at least a part of an inner wall surface of the second slot wall (112) and a plane in which the slot bottom (113) is located, and the second angle is an acute angle.

3. The rotor structure for the direct-start synchronous reluctance motor according to claim 1, wherein a plurality of slit slots (30) are provided between the q-axis squirrel cage slot (11) and the shaft hole (12) of the rotor core (10), and a further squirrel cage slot (40) is arranged adjacent to both ends of each slit slot (30);
wherein a first end of the further squirrel cage slot (40) is arranged adjacent to the slit slot (30), and a second end of the further squirrel cage slot (40) is arranged to extend outward in the radial direction of the rotor core (10) and gradually approach a *d*-axis of the rotor core (10);
wherein further squirrel cage slots (40) are arranged at intervals in the circumferential direction of the rotor core (10), and the further squirrel cage slots (40) are arranged symmetrically with respect to the *q*-axis or the *d*-axis.

4. The rotor structure for the direct-start synchronous reluctance motor according to claim 3, wherein a first independent squirrel cage slot (51) is provided between a first end of the slit slot (30) adjacent to the *q*-axis squirrel cage slot (11) and a first end of the *q*-axis squirrel cage slot (11) along a *q*-axis direction, and a second independent squirrel cage slot (52) is provided between a second end of the slit slot (30) and a second end of the *q*-axis squirrel cage slot (11);
wherein the first independent squirrel cage slot (51) and the second independent squirrel cage slot (52) are symmetrically arranged with respect to the *q*-axis;
wherein there are two first independent squirrel cage slots (51), and the two first independent squirrel cage slots (51) are arranged symmetrically with respect to the *d*-axis; or there are two second independent squirrel cage slots (52), and the two second independent squirrel cage slots (52) are arranged symmetrically with respect to the *d*-axis.

5. The rotor structure for the direct-start synchronous reluctance motor according to claim 3, wherein the slit slot (30) is arc-shaped, and an arc of the slit slot (30) is arranged to gradually decrease outward in the radial direction of the rotor core (10).

6. The rotor structure for the direct-start synchronous reluctance motor according to claim 3, wherein a width of the slit slot (30) is arranged to gradually increase from a middle portion of the slit slot (30) to both ends of the slit slot (30).

7. The rotor structure for the direct-start synchronous reluctance motor according to claim 3, wherein a distance between the end of the slit slot (30) and an adjacent further squirrel cage slot (40) is *L*, wherein 0.5 δ ≤*L*≤ δ , and δ is a width of an air gap between the stator core and the rotor core (10).

8. The rotor structure for the direct-start synchronous reluctance motor according to claim 4, wherein the first independent squirrel cage slot (51), the second independent squirrel cage slot (52), the further squirrel cage slots (40) and the q-axis squirrel cage slot (11) are all injected with a conductive and non-magnetic material (20), the conductive and non-magnetic material (20) is aluminum or an aluminum alloy.

9. The rotor structure for the direct-start synchronous reluctance motor according to claim 4, wherein the second end of the further squirrel cage slot (40) is arranged at a distance from an outer edge of the rotor core (10), such that the further squirrel cage slot (40) forms a closed slot structure, or, the outer edge of the rotor core (10) are provided with notches respectively communicating with the further squirrel cage slot (40), the first independent squirrel cage slot (51), and the second independent squirrel cage slot (52).

10. The rotor structure for the direct-start synchronous reluctance motor according to claim 1, wherein the *q*-axis passes through the middle portion of the *q*-axis squirrel cage slot (11), and the *q*-axis squirrel cage slot (11) is symmetrically arranged with respect to the *q*-axis.

11. The rotor structure for the direct-start synchronous reluctance motor according to claim 1, wherein there are two *q*-axis squirrel cage slots (11), and the two *q*-axis squirrel cage slots (11) are arranged symmetrically with respect to the *d*-axis.

12. The rotor structure for the direct-start synchronous reluctance motor according to claim 4, wherein there are two first independent squirrel cage slots (51), and the two first independent squirrel cage slots (51) are arranged symmetrically with respect to the *d*-axis, there are two second independent squirrel cage slots (52), and the two second independent squirrel cage slots (52) are arranged symmetrically with respect to the *d*-axis.

13. A motor, comprising the rotor structure for the direct-start synchronous reluctance motor of any one of claims 1 to 12.

14. A compressor, comprising the rotor structure for the direct-start synchronous reluctance motor of any one of claims 1 to 12.

## Patentansprüche

1. Rotorstruktur für einen Direktstart-Synchronreluktanzmotor, umfassend:
einen Rotorkern (10), wobei eine q-Achsen-Kurzschlussläufernut (11) auf einer Außenumfangsfläche des Rotorkerns (10) vorgesehen ist, die q-Achsen-Kurzschlussläufernut (11) in einer q-Achsen-Richtung des Rotorkerns (10) angeordnet ist, ein Ende von mindestens einer von zwei Nutenwänden der q-Achsen-Kurzschlussläufernut (11) angrenzend an die Außenumfangsfläche des Rotorkerns (10) angeordnet ist, um sich zu der anderen Nutwand zu erstrecken, so dass ein Schnappbegrenzungsraum zwischen den zwei Nutenwänden aufgefächert ist und der Schnappbegrenzungsraum dazu ausgelegt ist, mit einem leitfähigen und nichtmagnetischen leitfähigen Material (20) gefüllt zu werden;
**dadurch gekennzeichnet, dass**
eine Breite eines Querschnitts der q-Achsen-Kurzschlussläufernut (11) allmählich verringert wird und dann allmählich nach außen in einer radialen Richtung des Rotorkerns (10) vergrößert wird;
wobei ein Winkel zwischen einer Linie, die eine Kante der ersten Nutwand (111) angrenzend an die Außenumfangsfläche des Rotorkerns (10) mit einer Lochmitte eines Wellenlochs (12) des Rotorkerns (10) verbindet, und einer Linie, die eine Kante der zweiten Nutwand (112) angrenzend an die Außenumfangsfläche des Rotorkerns (10) mit der Lochmitte des Wellenlochs (12) des Rotorkerns (10) verbindet, gleich θ ist, wobei 0,08*180/p≤ θ≤0,3*180/p und p die Anzahl der Motorpolpaare ist.

2. Rotorstruktur für den Direktstart-Synchronreluktanzmotor nach Anspruch 1, wobei die zwei Nutenwände eine erste Nutenwand (111) und eine zweite Nutenwand (112) umfassen, ein erstes Ende der ersten Nutenwand (111) mit einem Nutenboden (113) der q-Achsen-Kurzschlussläufernut (11) verbunden ist, ein zweites Ende der ersten Nutenwand (111) dazu ausgelegt ist, sich zu einer Seite der zweiten Nutenwand (112) zu erstrecken, ein erster Winkel zwischen mindestens einem Teil einer Innenwandfläche der ersten Nutenwand (111) und einer Ebene besteht, in der sich der Nutenboden (113) befindet, und der erste Winkel ein spitzer Winkel ist;
wobei ein erstes Ende der zweiten Nutenwand (112) mit dem Nutenboden (113) verbunden ist und ein zweites Ende der zweiten Nutenwand (112) dazu ausgelegt ist, sich zu einer Seite der ersten Nutenwand (111) zu erstrecken, und ein zweiter Winkel zwischen mindestens einem Teil einer Innenwandfläche der zweiten Nutenwand (112) und einer Ebene besteht, in der sich der Nutenboden (113) befindet, und der zweite Winkel ein spitzer Winkel ist.

3. Rotorstruktur für den Direktstart-Synchronreluktanzmotor nach Anspruch 1, wobei mehrere Schlitznuten (30) zwischen der q-Achsen-Kurzschlussläufernut (11) und dem Wellenloch (12) des Rotorkerns (10) vorgesehen sind und eine weitere Kurzschlussläufernut (40) angrenzend an beide Enden jeder Schlitznut (30) angeordnet ist;
wobei ein erstes Ende der weiteren Kurzschlussläufernut (40) angrenzend an die Schlitznut (30) angeordnet ist und ein zweites Ende der weiteren Kurzschlussläufernut (40) angeordnet ist, um sich in radialer Richtung des Rotorkerns (10) nach außen zu erstrecken und sich allmählich einer d-Achse des Rotorkerns (10) anzunähern;
wobei weitere Kurzschlussläufernuten (40) in Umfangsrichtung des Rotorkerns (10) in Intervallen angeordnet sind und die weiteren Kurzschlussläufernuten (40) symmetrisch zur q-Achse oder d-Achse angeordnet sind.

4. Rotorstruktur für den Direktstart-Synchronreluktanzmotor nach Anspruch 3, wobei eine erste unabhängige Kurzschlussläufernut (51) zwischen einem ersten Ende der Schlitznut (30) angrenzend an die q-Achsen-Kurzschlussläufernut (11) und einem ersten Ende der q-Achsen-Kurzschlussläufernut (11) entlang einer q-Achsen-Richtung vorgesehen ist, und eine zweite unabhängige Kurzschlussläufernut (52) zwischen einem zweiten Ende der Schlitznut (30) und einem zweiten Ende der q-Achsen-Kurzschlussläufernut (11) vorgesehen ist;
wobei die erste unabhängige Kurzschlussläufernut (51) und die zweite unabhängige Kurzschlussläufernut (52) symmetrisch zur q-Achse angeordnet sind;
wobei zwei erste unabhängige Kurzschlussläufernuten (51) vorhanden sind und die zwei ersten unabhängigen Kurzschlussläufernuten (51) symmetrisch zur d-Achse angeordnet sind; oder zwei zweite unabhängige Kurzschlussläufernuten (52) vorhanden sind und die zwei zweiten unabhängigen Kurzschlussläufernuten (52) symmetrisch zur d-Achse angeordnet sind.

5. Rotorstruktur für den Direktstart-Synchronreluktanzmotor nach Anspruch 3, wobei die Schlitznut (30) bogenförmig ist und ein Bogen der Schlitznut (30) so angeordnet ist, dass er in radialer Richtung des Rotorkerns (10) allmählich nach außen abnimmt.

6. Rotorstruktur für den Direktstart-Synchronreluktanzmotor nach Anspruch 3, wobei eine Breite der Schlitznut (30) so angeordnet ist, dass sie von einem mittigen Abschnitt der Schlitznut (30) zu beiden Enden der Schlitznut (30) allmählich zunimmt.

7. Rotorstruktur für den Direktstart-Synchronreluktanzmotor nach Anspruch 3, wobei ein Abstand zwischen dem Ende der Schlitznut (30) und einer angrenzenden weiteren Kurzschlussläufernut (40) L ist, wobei 0,5 δ≤L≤ δ und δ eine Breite eines Luftspalts zwischen dem Statorkern und dem Rotorkern (10) ist.

8. Rotorstruktur für den Direktstart-Synchronreluktanzmotor nach Anspruch 4, wobei die erste unabhängige Kurzschlussläufernut (51), die zweite unabhängige Kurzschlussläufernut (52), die weiteren Kurzschlussläufernuten (40) und die q-Achsen-Kurzschlussläufernut (11) alle mit einem leitfähigen und nichtmagnetischen Material (20) gefüllt sind, das leitfähige und nichtmagnetische Material (20) Aluminium oder eine Aluminiumlegierung ist.

9. Rotorstruktur für den Direktstart-Synchronreluktanzmotor nach Anspruch 4, wobei das zweite Ende der weiteren Kurzschlussläufernut (40) in einem Abstand von einem Außenrand des Rotorkerns (10) angeordnet ist, so dass die weitere Kurzschlussläufernut (40) eine geschlossene Nutenstruktur bildet, oder der Außenrand des Rotorkerns (10) mit Kerben versehen ist, die jeweils mit der weiteren Kurzschlussläufernut (40), der ersten unabhängigen Kurzschlussläufernut (51) und der zweiten unabhängigen Kurzschlussläufernut (52) in Verbindung stehen.

10. Rotorstruktur für den Direktstart-Synchronreluktanzmotor nach Anspruch 1, wobei die q-Achse durch den mittigen Abschnitt der q-Achsen-Kurzschlussläufernut (11) verläuft und die q-Achsen-Kurzschlussläufernut (11) symmetrisch zur q-Achse angeordnet ist.

11. Rotorstruktur für den Direktstart-Synchronreluktanzmotor nach Anspruch 1, wobei zwei q-Achsen-Kurzschlussläufernuten (11) vorhanden sind und die zwei q-Achsen-Kurzschlussläufernuten (11) symmetrisch zur d-Achse angeordnet sind.

12. Rotorstruktur für den Direktstart-Synchronreluktanzmotor nach Anspruch 4, wobei zwei erste unabhängige Kurzschlussläufernuten (51) vorhanden sind und die zwei ersten unabhängigen Kurzschlussläufernuten (51) symmetrisch zur d-Achse angeordnet sind, zwei zweite unabhängige Kurzschlussläufernuten (52) vorhanden sind und die zwei zweiten unabhängigen Kurzschlussläufernuten (52) symmetrisch zur d-Achse angeordnet sind.

13. Motor, umfassend die Rotorstruktur für den Direktstart-Synchronreluktanzmotor nach einem der Ansprüche 1 bis 12.

14. Verdichter, umfassend die Rotorstruktur für den Direktstart-Synchronreluktanzmotor nach einem der Ansprüche 1 bis 12.

## Revendications

1. Structure de rotor pour moteur synchrone à réluctance à démarrage direct comprenant :
un noyau de rotor (10), une rainure de cage d'écureuil d'axe q (11) étant définie sur une surface circonférentielle extérieure du noyau de rotor (10), la rainure de cage d'écureuil d'axe q (11) étant située dans une direction d'axe q du noyau de rotor (10), une extrémité d'au moins une de deux parois de rainure de la rainure de cage d'écureuil d'axe q (11) adjacentes à la surface circonférentielle extérieure du noyau de rotor (10) étant disposée pour s'étendre vers l'autre paroi de rainure, de telle sorte qu'un espace limite d'encliquetage soit formé entre les deux parois de rainure, et l'espace limite d'encliquetage étant conçu pour être rempli d'un matériau conducteur et non magnétique (20) ;
**caractérisée en ce que**
la largeur d'une section transversale de la rainure de cage d'écureuil d'axe q (11) diminue progressivement, puis augmente progressivement vers l'extérieur dans une direction radiale du noyau de rotor (10) ;
un angle entre une ligne reliant un bord de la première paroi de rainure (111) adjacente à la surface circonférentielle extérieure du noyau de rotor (10) et un centre de trou d'un trou d'arbre (12) du noyau de rotor (10) et une ligne reliant un bord de la seconde paroi de rainure (112) adjacente à la surface circonférentielle extérieure du noyau de rotor (10) au centre de trou du trou d'arbre (12) du noyau de rotor (10) étant égal à θ, où 0,08*180/p ≤ θ ≤ 0,3*180/p, et p est le nombre de paires de pôles de moteur.

2. Structure de rotor pour moteur synchrone à réluctance à démarrage direct selon la revendication 1, dans laquelle les deux parois de rainure comprennent une première paroi de rainure (111) et une seconde paroi de rainure (112), une première extrémité de la première paroi de rainure (111) est reliée à un fond de rainure (113) de la rainure de cage d'écureuil d'axe q (11), une seconde extrémité de la première paroi de rainure (111) est disposée pour s'étendre vers un côté de la seconde paroi de rainure (112), un premier angle est formé entre au moins une partie d'une surface de paroi intérieure de la première paroi de rainure (111) et un plan dans lequel se trouve le fond de rainure (113), et le premier angle est un angle aigu ;
dans laquelle une première extrémité de la seconde paroi de rainure (112) est reliée au fond de rainure (113), et une seconde extrémité de la seconde paroi de rainure (112) est disposée pour s'étendre vers un côté de la première paroi de rainure (111), et un second angle est formé entre au moins une partie d'une surface de paroi intérieure de la seconde paroi de rainure (112) et un plan dans lequel se trouve le fond de rainure (113), et le second angle est un angle aigu.

3. Structure de rotor pour moteur synchrone à réluctance à démarrage direct selon la revendication 1, dans laquelle une pluralité de fentes (30) sont définies entre la rainure de cage d'écureuil d'axe q (11) et le trou d'arbre (12) du noyau de rotor (10), et une autre rainure de cage d'écureuil (40) est disposée près des deux extrémités de chaque fente (30) ;
dans laquelle une première extrémité de l'autre rainure de cage d'écureuil (40) est disposée à proximité de la fente (30), et une seconde extrémité de l'autre rainure de cage d'écureuil (40) est disposée de manière à s'étendre vers l'extérieur dans la direction radiale du noyau de rotor (10) et à se rapprocher progressivement d'un axe d du noyau de rotor (10) ;
dans laquelle d'autres rainures de cage d'écureuil (40) sont disposées de façon à être espacées les unes des autres dans la direction circonférentielle du noyau de rotor (10), et les autres rainures de cage d'écureuil (40) sont disposées symétriquement par rapport à l'axe q ou à l'axe d.

4. Structure de rotor pour moteur synchrone à réluctance à démarrage direct selon la revendication 3, dans laquelle une première rainure de cage d'écureuil indépendante (51) est définie entre une première extrémité de la fente (30) adjacente à la rainure de cage d'écureuil d'axe q (11) et une première extrémité de la rainure de cage d'écureuil d'axe q (11) le long d'une direction d'axe q, et une seconde rainure de cage d'écureuil indépendante (52) est définie entre une seconde extrémité de la fente (30) et une seconde extrémité de la rainure de cage d'écureuil d'axe q (11) ;
dans laquelle la première rainure de cage d'écureuil indépendante (51) et la seconde rainure de cage d'écureuil indépendante (52) sont disposées symétriquement par rapport à l'axe q ;
dans laquelle il y a deux premières rainures de cage d'écureuil indépendantes (51), et les deux premières rainures de cage d'écureuil indépendantes (51) sont disposées symétriquement par rapport à l'axe d ; ou il y a deux secondes rainures de cage d'écureuil indépendantes (52), et les deux secondes rainures de cage d'écureuil indépendantes (52) sont disposées symétriquement par rapport à l'axe d.

5. Structure de rotor pour moteur synchrone à réluctance à démarrage direct selon la revendication 3, dans laquelle la fente (30) est en forme d'arc, et un arc de la fente (30) est défini de façon à diminuer progressivement vers l'extérieur dans la direction radiale du noyau de rotor (10).

6. Structure de rotor pour moteur synchrone à réluctance à démarrage direct selon la revendication 3, dans laquelle une largeur de la fente (30) est définie de façon à augmenter progressivement depuis une partie médiane de la fente (30) jusqu'aux deux extrémités de la fente (30).

7. Structure de rotor pour moteur synchrone à réluctance à démarrage direct selon la revendication 3, dans laquelle une distance entre l'extrémité de la fente (30) et une autre rainure de cage d'écureuil (40) adjacente est L, dans laquelle 0,5 δ ≤ L ≤ à et δ est une largeur d'un entrefer entre le noyau de stator et le noyau de rotor (10).

8. Structure de rotor pour moteur synchrone à réluctance à démarrage direct selon la revendication 4, dans laquelle un matériau conducteur et non magnétique (20) est injecté dans chacune de la première rainure de cage d'écureuil indépendante (51), de la seconde rainure de cage d'écureuil indépendante (52), des autres rainures de cage d'écureuil (40) et de la rainure de cage d'écureuil d'axe q (11), le matériau conducteur et non magnétique (20) étant de l'aluminium ou un alliage d'aluminium.

9. Structure de rotor pour moteur synchrone à réluctance à démarrage direct selon la revendication 4, dans laquelle la seconde extrémité de l'autre rainure de cage d'écureuil (40) est disposée à une certaine distance d'un bord extérieur du noyau de rotor (10), de sorte que l'autre rainure de cage d'écureuil (40) forme une structure de rainure fermée, ou le bord extérieur du noyau de rotor (10) est pourvu d'encoches communiquant respectivement avec l'autre rainure de cage d'écureuil (40), la première rainure de cage d'écureuil indépendante (51) et la seconde rainure de cage d'écureuil indépendante (52).

10. Structure de rotor pour moteur synchrone à réluctance à démarrage direct selon la revendication 1, dans laquelle l'axe q traverse la partie médiane de la rainure de cage d'écureuil d'axe q (11), et la rainure de cage d'écureuil d'axe q (11) est disposée symétriquement par rapport à l'axe q.

11. Structure de rotor pour moteur synchrone à réluctance à démarrage direct selon la revendication 1, dans laquelle il y a deux rainures de cage d'écureuil d'axe q (11), et les deux rainures de cage d'écureuil d'axe q (11) sont disposées symétriquement par rapport à l'axe d.

12. Structure de rotor pour moteur synchrone à réluctance à démarrage direct selon la revendication 4, dans laquelle il y a deux premières rainures de cage d'écureuil indépendantes (51), et les deux premières rainures de cage d'écureuil indépendantes (51) sont disposées symétriquement par rapport à l'axe d, il y a deux secondes rainures de cage d'écureuil indépendantes (52), et les deux secondes rainures de cage d'écureuil indépendantes (52) sont disposées symétriquement par rapport à l'axe d.

13. Moteur, comprenant la structure de rotor pour moteur synchrone à réluctance à démarrage direct selon l'une quelconque des revendications 1 à 12.

14. Compresseur, comprenant la structure de rotor pour moteur synchrone à réluctance à démarrage direct selon l'une quelconque des revendications 1 à 12.
